(19) Europäisches Patentamt
European Patent Office
Office européen des brevets

(11) **EP 3 395 983 A1**

(12) **EUROPEAN PATENT APPLICATION**
published in accordance with Art. 153(4) EPC

(43) Date of publication:
**31.10.2018 Bulletin 2018/44**

(21) Application number: **16879379.2**

(22) Date of filing: **22.12.2016**

(51) Int Cl.:
**C22C 38/06** (2006.01)     **C22C 38/04** (2006.01)
**C22C 38/02** (2006.01)     **C22C 38/00** (2006.01)
**C21D 8/02** (2006.01)     **B21B 3/00** (2006.01)
**B21B 37/74** (2006.01)

(86) International application number:
**PCT/KR2016/015125**

(87) International publication number:
**WO 2017/111512 (29.06.2017 Gazette 2017/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.12.2015 KR 20150184164**

(71) Applicant: **Posco**
**Pohang-si, Gyeongsangbuk-do 37859 (KR)**

(72) Inventors:
• **JO, Min ho**
**Pohang-si**
**Gyeongsangbuk-do 37859 (KR)**
• **HONG, Young-Kwang**
**Pohang-si**
**Gyeongsangbuk-do 37859 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **COLD ROLLED STEEL SHEET FOR CONTINUOUS TYPE SELF-BRAZING AND MANUFACTURING METHOD THEREFOR**

(57) A continuous self-brazing cold rolled steel sheet according to an embodiment of the present disclosure includes 0.02 wt% to 0.08 wt% of C, 0.03 wt% to 0.10 wt% of Mn, 0.10 wt% or less of Si (excluding 0 wt%), 0.005 wt% to 0.05 wt% of Al, 0.015 wt% or less of P (excluding 0 wt%), 0.01 wt% or less of S (excluding 0 wt%), 0.005 wt% or less of N (excluding 0 wt%), 0.0003 wt% to 0.0036 wt% of B, a remainder Fe, and other inevitable impurities, and satisfying Equations (1) and (2), in which an average crystal grain size is 8 μm to 16 μm.

[Equation 1]

$$0.15 \leq ([B]/10.81)/([Al]/26.98)$$

[Equation 2]

$$0.8 \leq ([B]/10.81)/([N]/14.01) \leq 1.6$$

(In Equations (1) and (2), [B], [Al] and [N] denote percent by weights of B, Al, and N.)

**EP 3 395 983 A1**

**Description**

**[Technical Field]**

The present disclosure relates to a continuous self-brazing cold rolled steel sheet, and a method of manufacturing the same.

**[Background Art]**

A self-brazing cold rolled steel sheet is a material for plating, and a final product is obtained by plating surfaces of the steel sheet with another metal, and joining the plated surfaces, which contact each other, through high-temperature heat treatment after molding. Examples of required characteristics of the steel sheet include processability at the room temperature, shape fixability at a brazing temperature, and processability and strength after cooling. An example of a product made using the corresponding material is a double wound pipe formed by plating a cold rolled steel sheet with Cu, performing pipe making in which the cold rolled steel sheet is wound in the form of a pipe twice, and then self-brazing the wound cold rolled steel sheet. Since the cold rolled steel sheet is brazed at a melting temperature or more of Cu, the above-described characteristics of the steel sheet are more strictly required.

In recent years, a continuous brazing process is more preferred than a batch brazing process to improve productivity of a brazing process. In the batch brazing process, after a material is molded, the molded product is cut into various pieces, and the pieces are simultaneously heat-treated. On the other hand, in the continuous brazing process, after a material is molded, and the molded product is continuously heat-treated without a cutting process. Due to the difference between the processes, in the batch brazing process, several tens of seconds are required for the heat treatment, but in the continuous brazing process, several seconds are required for the heat treatment, and thus high productivity is secured.

As a brazing process is changed from the batch brazing process to the continuous brazing process, characteristics required for a material are also changed. In the batch brazing process, since a material should be maintained for a long time at a high temperature, properties of a material at a high temperature, such as high-temperature shape fixability and a grain boundary penetration inhibition property of a plated molten layer, are particularly important. On the other hand, in the continuous brazing process, since the heat treatment is performed for several seconds, properties required for a material at high temperatures are less strict. In addition, the continuous brazing process has an advantage in that since a cooling speed is rapid, a crystal grain may be prevented from being coarsened by controlling a cooling pattern only by adding C without expensive precipitate forming elements such as Ti, Nb, and V. Further, since C is effective in preventing penetration of the plated molten layer into a grain boundary by strengthening the gain boundary and helps to improve the strength of a final product as well, C is being actively added. However, since addition of C easily hardens a material to degrade processability and cause defects, a method for securing processability should be necessarily required.

In the related art, a manufacturing method is proposed in which batch annealing is performed for 5 hours or more using low-carbon steel to ensure processability. However, since the batch annealing is a process that requires a long time in nature, production efficiency is greatly degraded, and a material in a lengthwise direction and a widthwise direction of a coil is ununiform.

Further, a method is proposed in which a crystal grain is controlled from a precipitate formed by adding Ti and B to low-carbon steel or a method is proposed in which a precipitate is formed by adding Ti, Nb, and B to ultra-low carbon steel, to strengthen a final product. However, the precipitate forming elements are mostly expensive, and since the ultra-low carbon steel has a low carbon content, the plated molten layer is easily penetrated to a crystal grain boundary.

Further, a method is proposed in which an AlN precipitate is formed on a surface through controlling an annealing atmosphere, a copper penetration resisting property is secured from a BN precipitate through adding B, and growth of a high-temperature crystal gain is suppressed. However, there is a limitation in that an expensive process condition is required to control the annealing atmosphere.

The above-described related arts have a problem in that an expensive additive element or a difficult process is required to secure required characteristics of a material, and characteristics of the continuous brazing process are not properly reflected. Thus, development of a material optimized for the continuous brazing process is required.

**[DISCLOSURE]**

**[Technical Problem]**

An embodiment of the present disclosure provides a continuous self-brazing cold rolled steel sheet which contains a certain amount of C and has excellent processability even while continuous annealing is performed.

Another embodiment of the present disclosure provides a method of manufacturing a continuous self-brazing cold rolled steel sheet.

**[Technical Solution]**

A continuous self-brazing cold rolled steel sheet according to an embodiment of the present disclosure may include 0.02 wt% to 0.08 wt% of C, 0.03 wt% to 0.10 wt% of Mn, 0.10 wt% or less of Si (excluding 0 wt%), 0.005 wt% to 0.05 wt% of Al, 0.015 wt% or less of P (excluding 0 wt%), 0.01 wt% or less of S (excluding 0 wt%), 0.005 wt% or less of N (excluding 0 wt%), 0.0003 wt% to 0.0036 wt% of B, a remainder Fe, and other inevitable impurities, and satisfying Equations (1) and (2), in which an average crystal grain size is 8 $\mu$m to 16 $\mu$m.

$$[Equation\ 1]$$

$$0.15 \leq ([B]/10.81)/([Al]/26.98)$$

$$[Equation\ 2]$$

$$0.8 \leq ([B]/10.81)/([N]/14.01) \leq 1.6$$

(In Equations (1) and (2), [B], [Al] and [N] denote percent by weights of B, Al, and N.)
A weight ratio of AlN precipitates and BN precipitates may satisfy Equation (3).

$$[Equation\ 3]$$

$$\{[BN]/(10.81+14.01)\}/\{[AlN]/(26.98+14.01)\} \geq 1$$

(In Equation (3), [BN] and [AlN] denote percent by weights of the BN precipitates and the AlN precipitates.)
A weight ratio of N, the AlN precipitates, and the BN precipitates, existing in steel in a solid solution state, may satisfy Equation (4).

$$[Equation\ 4]$$

$$([N]/14.01)/\{[AlN]/(26.98+14.01)+[BN]/(26.98+14.01)\} \leq 0.1$$

(In Equation (4), [N], [BN], and [AlN] denote a solid solution amount (wt%) of N, and percent by weights of the BN precipitates and the AlN precipitates.)
A method of manufacturing a continuous self-brazing cold rolled steel sheet according to an embodiment of the present disclosure may include: heating, at 1200°C or more, a slab including 0.02 wt% to 0.08 wt% of C, 0.03 wt% to 0.10 wt% of Mn, 0.10 wt% or less of Si (excluding 0 wt%), 0.005 wt% to 0.05 wt% of Al, 0.015 wt% or less of P (excluding 0 wt%), 0.01 wt% or less of S (excluding 0 wt%), 0.005 wt% or less of N (excluding 0 wt%), 0.0003 wt% to 0.0036 wt% of B, a remainder Fe, and other inevitable impurities, and satisfying Equations (1) and (2); manufacturing a hot rolled steel sheet by hot rolling the heated slab; winding the hot rolled steel sheet; manufacturing a cold rolled steel sheet by cold rolling the wound hot rolled steel sheet; and annealing the cold rolled steel sheet at 600°C to 850°C.
In the heating of the slab, the slab may be heated at 1230°C to 1350°C.
In the manufacturing of the hot rolled steel sheet, a finish rolling temperature may range from 875°C to 1050°C.
In the winding of the hot rolled steel sheet, a winding temperature may range from 600°C to 750°C.
In the manufacturing of the cold rolled steel sheet, the cold rolling may be performed at a reduction rate of 50% to 95%.
In the annealing, continuous annealing may be performed for 20 seconds to 600 seconds at 600°C to 850°C.
In the annealing, batch annealing may be performed for 5 hours to 72 hours at 600°C to 800°C.
In the manufactured cold rolled steel sheet, a weight ratio of AlN precipitates and BN precipitates may satisfy Equation (3),

[Equation 3]

$$\{[BN]/(10.81+14.01)\}/\{[AlN]/(26.98+14.01)\} \geq 1$$

(In Equation (3), [BN] and [AlN] denote percent by weights of BN precipitates and AlN precipitates.)

A weight ratio of N, the AlN precipitates, and the BN precipitates, existing in the manufactured cold rolled steel sheet in a solid solution state, may satisfy Equation (4).

[Equation 4]

$$([N]/14.01)/\{[AlN]/(26.98+14.01)+[BN]/(26.98+14.01)\} \leq 0.1$$

(In Equation (4), [N], [BN] and [AlN] denote a solid solution amount (wt%) of N, and percent by weights of the BN precipitates and the AlN precipitates.)

A copper plated steel sheet according to an embodiment of the present disclosure may include a base steel sheet formed by the cold rolled steel sheet and a copper plated layer coated on a surface of the base steel sheet.

A depth, by which the plated layer is penetrated into the cold rolled steel sheet, may be 2.5 $\mu$m or less.

**[Advantageous Effects]**

According to an embodiment of the present disclosure, a hardening effect caused by precipitates is minimized through controlling formation of BN precipitates and AlN precipitates, so that a cold rolled steel sheet, which contains 0.02 wt% to 0.08 wt% of C, has excellent processability, and is suitable for a continuous self-brazing process, may be provided.

**[Mode for Invention]**

Although terms such as first, second, and third are used for describing various parts, various components, various areas, and/or various sections, the present disclosure is not limited thereto. Such terms are used only to distinguish any part, any component, any area, any layer, or any section from the other parts, the other components, the other areas, the other layers, or the other sections. Thus, a first part, a first component, a first area, a first layer, or a first section which is described below may be mentioned as a second part, a second component, a second area, a second layer, or a second section without departing from the scope of the present disclosure.

Here, terminologies used herein are merely used to describe a specific embodiment, and are not intended to limit the present disclosure. A singular form used herein includes a plural form as long as a phrase does not express a clearly opposite meaning. The term "include" used in the specification specifies specific characteristics, a specific area, a specific essence, a specific step, a specific operation, a specific element, and/or a specific ingredient, and does not exclude existence or addition of the other characteristics, the other area, the other essence, the other step, the other operation, the other element, and/or the other ingredient.

When it is mentioned that a first component is located "above" or "on" a second component, the first component may be located directly "above" or "on" the second component or a third component may be interposed therebetween. In contrast, when it is mentioned that a first component is located "directly above" a second component, a third component is not interposed therebetween.

Although not otherwise defined, all terms used herein, including technical terms and scientific terms, have the same meanings as those generally understood by those skilled in the art to which the present disclosure pertains. Terms defined in a generally used dictionary are interpreted as meanings according with related technical documents and currently disclosed contents, and are not interpreted as ideal meanings or very formal meanings unless otherwise defined.

Further, unless otherwise defined, % means wt%, and 1 ppm means 0.0001 wt%.

Hereinafter, embodiments of the present disclosure will be described in detail such that those skilled in the art to which the present disclosure pertains may easily implement the embodiments. However, the present disclosure may be implemented in various different forms, and is not limited to the embodiments described herein.

The present disclosure relates to a cold rolled steel sheet used as a material undergoing a plating process, a machining process, and a self-brazing process, and the material for the corresponding purpose has excellent processability at the room temperature, excellent shape fixability and excellent resistance to penetration of a plated molten layer at a self-brazing temperature, and excellent processability and strength after the self-brazing process.

The present disclosure relates to a continuous self-brazing cold rolled steel sheet which has a short heat treatment time and excellent productivity as compared to a batch self-brazing cold rolled steel sheet. When the continuous self-brazing cold rolled steel sheet is used, a crystal grain is not coarsened at high temperatures due to the short heat treatment time, so that characteristics required for the material at high temperatures may be secured by adding only C instead of expensive precipitate forming elements. Further, an increase in the content of C causes a final product to have excellent strength as well as an excellent grain boundary penetration inhibition property of the plated molten layer at high temperatures.

However, since the increase in the content of C causes an increase in hardness at the room temperature and a reduction in an elongation to cause a reduction in the productivity, this problem should be overcome. An effective method for improving the processability is to control microstructures through controlling precipitates. When the precipitates are very fine, growth of a crystal gain is suppressed, and thus microstructures are formed, so that hardness and strength increase. Thus, it is necessary to optimize the kind and the distribution of the precipitates. An embodiment of the present disclosure provides a continuous self-brazing cold rolled steel sheet in which a composition range of the cold rolled steel sheet is specifically limited, and desired microstructures are obtained by controlling precipitates, so that excellent processability is achieved.

A continuous self-brazing cold rolled steel sheet according to an embodiment of the present disclosure includes 0.02 wt% to 0.08 wt% of C, 0.03 wt% to 0.10 wt% of Mn, 0.10 wt% or less of Si (excluding 0 wt%), 0.005 wt% to 0.05 wt% of Al, 0.015 wt% or less of P (excluding 0 wt%), 0.01 wt% or less of S (excluding 0 wt%), 0.005 wt% or less of N (excluding 0 wt%), 0.0003 wt% to 0.0036 wt% of B, a remainder Fe, and other inevitable impurities.

First, the reason why compositions of the cold rolled steel sheet are limited will be described.

C: 0.02 wt% to 0.08 wt%

As the content of C increases, the strength becomes excellent, and coarsening of the crystal grain at high temperatures and penetration of the plated molten layer into the grain boundary are advantageously prevented. However, as the content of C increases, since yield strength increases and ductility decreases, the processability deteriorates. Further, since carbides are excessively precipitated when cooling is performed after the self-brazing process, the ductility of a product deteriorates. Thus, it is preferable that 0.02 wt% to 0.08 wt% of C is added.

Mn: 0.03 wt% to 0.10 wt%

Mn is an element that is combined with solid solution S in steel to be precipitated into MnS so as to prevent hot shortness caused by the solid solution S. It is preferable that 0.03 wt% or more of Mn is included to achieve the above-described effect. However, when the content of Mn exceeds 0.10 wt%, the steel sheet is hardened, and thus the ductility significantly deteriorates.

Si: 0.10 wt% or less

Si is an element used as a decarburizer, and contributes to improving the strength by solid solution strengthening. However, when the content of Si exceeds 0.10 wt%, since Si-based oxide is generated on a surface of the steel sheet during an annealing process, defects occur during the plating process. Thus, it is preferable that 0.10 wt% or less of Si is included.

Al: 0.005 wt% to 0.08 wt%

Al is an element having a very large deoxidizing effect, and it is preferable that 0.005 wt% or more of Al is added. However, since Al is combined with N to be precipitated into fine AlN, growth of the crystal grain is suppressed and the steel is hardened. Further, when too much Al is added, Al exists in the steel in a solid solution state, and thus processability of the steel is reduced due to solid solution strengthening. Thus, the content of Al is limited to 0.005 wt% to 0.08 wt%.

P: 0.015 wt% or less

When a predetermined content or less of P is added, ductility of the steel may be not greatly reduced, and the strength may increase. However, when 0.015 wt% or more of P is added, since P is segregated in a crystal grain boundary to harden the steel, it is preferable that the content of P is limited to 0.015 wt% or less. In more detail, 0.01 wt% or less of P may be included.

S: 0.01 wt% or less

Since S is an element that causes hot shortness at a time of solid solution, Mn should be added to induce precipitation of MnS. However, excessive precipitation of MnS cures the steel, and thus is not preferable. Thus, an upper limit of S is limited to 0.01 wt%.

N: 0.005 wt% or less

N forms various nitride precipitates to hinder the growth of the crystal grain so as to reduce the ductility. Further, when the precipitation fails, N is fixed to a potential, thereby causing deterioration of the processability due to aging. Although N is frequently contained as an element inevitably existing in the steel, it is preferable that an upper limit of the content N is limited to 0.005 wt% to minimize the above-described effect.

B: 0.0003 wt% to 0.0036 wt%

Since B is combined with N to form BN precipitates that are larger than and coarser than the AIN precipitates, the deterioration of the processability resulting from the formation of the AIN precipitates may be alleviated. It is preferable that 0.0003 wt% or more of B is added to obtain the above-described effect. However, when a large amount of B is added, B is segregated in the grain boundary. Thus, since the crystal grain becomes finer and the strength increases, it is preferable that an upper limit of the content of B is limited to 0.0036 wt% to secure the processability. In more detail, 0.0003 wt% to 0.0032 wt% of B may be included.

It is preferable that a weight ratio of Al and B satisfies Equation (1).

$$[\text{Equation 1}]$$

$$0.15 \leq ([B]/10.81)/([Al]/26.98)$$

(In Equation (1), [B] and [Al] denote percent by weights of B and Al.)

Al and B are combined with N to form the AIN precipitates and the BN precipitates. The BN precipitates tend to be precipitated to be coarser than the AIN precipitates, thereby advantageously achieving the growth of the crystal grain and contributing the ductility. Thus, it is important that B is added in proportion to the content of Al, so that the BN precipitates may be formed relatively well. Considering nitridation reactivities of Al and B, when Equation (1) is satisfied, the above-described effect may be achieved well. More preferably, when Equation (1-1) is satisfied, the effect may be achieved better.

$$[\text{Equation 1-1}]$$

$$0.3 \leq ([B]/10.81)/([Al]/26.98)$$

It is preferable that a weight ratio of B and N satisfies Equation (2).

$$[\text{Equation 2}]$$

$$0.8 \leq ([B]/10.81)/([N]/14.01) \leq 1.6$$

(In Equation (2), [B] and [N] denote percent by weights of B and N.)

B is combined with N to be precipitated into BN, and thus the content of solid solution N is reduced so that the aging is reduced. Further, when N, which fails to be combined with B, is combined with Al, curing is caused by the AIN precipitates that are finer than the BN precipitates. Thus, it is preferable that B is added in proportion to the content of N as represented by Equation (2), thereby improving the processability. However, when an excessively large amount of B is added as compared to the content of N, since B, which fails to be precipitated into BN, is segregated in the grain boundary in a large amount to cause the curing, a ratio is limited as represented by Equation (2).

Additionally, it is preferable that precipitate forming elements such as Ti, Nb, and V are not added. These elements have a strong affinity with C and N in the steel to form fine precipitates, thereby curing the steel. In the case of the batch brazing process, since a heat treatment time is several tens of seconds, which are long, there is a limit to preventing the crystal grain from being coarsened only by carbon. Thus, the precipitate forming elements such as Ti, Nb and V are added. However, in the case of the continuous brazing process, since the coarsening of the crystal grain may be suppressed only by adding C, the precipitate forming elements such as Ti, Nb, and V are unnecessary. Further, when the precipitate forming elements are added, since the processability deteriorates, the addition of the precipitate forming elements is limited.

It is preferable that a remainder except for the above-described compositions includes Fe and other inevitable impurities, and the steel sheet according to the present disclosure does not exclude addition of other compositions. The inevitable impurities may be unintentionally mixed from a raw material or a surrounding environment in a steel manufacturing process, and thus may not be excluded. Technicians in the ordinary steel manufacturing field may understand the inevitable impurities.

The cold rolled steel sheet according to an embodiment of the present disclosure may have an average crystal grain size of 8 to 16 $\mu$m. The processability is improved in the above-described range, and the penetration of the plated molten layer into the grain boundary is advantageously prevented.

A weight ratio of the AIN precipitates and the BN precipitates may satisfy Equation (3).

$$[\text{Equation 3}]$$

$$\{[BN]/(10.81+14.01)\}/\{[AIN]/(26.98+14.01)\} \geq 1$$

(In Equation (3), [BN] and [AIN] denote percent by weights of the BN precipitates and the AIN precipitates.)

A weight ratio of N, the AIN precipitates, and the BN precipitates, existing in the steel in a solid solution state, may satisfy Equation (4).

$$[\text{Equation 4}]$$

$$([N]/14.01)/\{[AIN]/(26.98+14.01)+[BN]/(26.98+14.01)\} \leq 0.1$$

(In Equation (4), [N], [BN], and [AIN] denote a solid solution amount (wt%) of N, and percent by weights of BN and AIN.

As Equations (3) and (4) are satisfied, the processability is improved, and the penetration of the plated molten layer into the grain boundary is advantageously prevented.

The cold rolled steel sheet according to the embodiment of the present disclosure is excellent in processability, and particularly, may satisfy a hardness (HR30T) of 52 or less, a yield strength of 320 MPa or less, and an elongation of 30% or more.

A method of manufacturing a continuous self-brazing cold rolled steel sheet according to the embodiment of the present disclosure includes: heating, at 1200°C or more, a slab including 0.02 wt% to 0.08 wt% of C, 0.03 wt% to 0.10 wt% of Mn, 0.10 wt% or less of Si (excluding 0 wt%), 0.005 wt% to 0.05 wt% of Al, 0.015 wt% or less of P (excluding 0 wt%), 0.01 wt% or less of S (excluding 0 wt%), 0.005 wt% or less of N (excluding 0 wt%), 0.0003 wt% to 0.0036 wt% of B, a remainder Fe, and other inevitable impurities, and satisfying Equations (1) and (2); manufacturing a hot rolled steel sheet by hot rolling the heated slab; winding the hot rolled steel sheet; manufacturing a cold rolled steel sheet by cold rolling the wound hot rolled steel sheet; and annealing the cold rolled steel sheet at 600°C to 850°C.

First, the slab is heated at 1200°C or more. The reason why an addition ratio of each composition is limited is the same as the above-described reason why the compositions of the cold rolled steel sheet are limited. Since the compositions of the slab are not substantially changed during a hot rolling process, a cold rolling process, and the like, which will be described below, the compositions of the slab are the same as the compositions of the cold rolled steel sheet. Since precipitates existing in the steel should be mostly solid solved again, a temperature of 1200°C or more is required, and more preferably, the slab is heated at 1230°C to 1350°C to solid solve the precipitates well.

Next, the heated slab is hot rolled to manufacture the hot rolled steel sheet. A hot rolling finish temperature may be Ar3 or more. The reason why the hot rolling finish temperature is limited to Ar3 or more is to perform rolling in an Austenite single phase region. In this case, Ar3 means a Ferrite transformation start temperature, and may be calculated by the following equation.

$$Ar3 = 910-(273 \times [C])-(74 \times [Mn])$$

In this case, [C] and [Mn] mean percent by weights of C and Mn. In more detail, a hot rolling finish temperature may be 875°C to 1050°C.

Next, the hot rolled steel sheet is wound. In this case, a winding temperature may be 600°C to 750°C. As the hot rolled steel sheet is wound at 600°C or more, N that still remains in a solid solution state may be sufficiently precipitated, so that excellent aging resistance properties may be secured. When the hot rolled steel sheet is wound at a temperature that is smaller than 600°C, the material may be hardened due to the fine precipitates. Further, when the hot rolled steel sheet is wound at a temperature that is larger than 750°C, the crystal grain is coarsened, thereby degrading a cold rolling property.

Next, the wound hot rolled steel sheet is cold rolled to manufacture a cold rolled steel sheet. In this case, the cold rolling may be performed at a reduction rate of 50% to 95%. The reduction rate determines the final thickness of the cold rolled steel sheet. When the reduction rate is smaller than 50%, it is difficult to secure a final target thickness, and when the reduction rate exceeds 95%, the cold rolling is difficult due to a large rolling load.

Next, the cold rolled steel sheet is annealed at 600°C to 850°C. In this process, the crystal grain stretched during the cold rolling is recrystallized. When the annealing is performed at a temperature that is smaller than 600°C, since the recrystallization does not sufficiently occur, potentials generated during the cold rolling are not sufficiently removed, and thus the ductility deteriorates. Further, when the annealing is performed at a temperature that is larger than 850°C, since the crystal grain is coarsened, the processability deteriorates. In the annealing, continuous annealing may be performed for 20 seconds to 600 seconds at 600°C to 850°C or batch annealing may be performed for 5 hours to 72 hours at 600°C to 800°C.

In the cold rolled steel sheet including the above-described compositions and obtained through the above-described manufacturing process, N included in the steel is precipitated into the BN precipitates that is coarser than the fine AlN precipitates, so that curing caused by miniaturization of the crystal grain is minimized. Further, a certain amount or more of C is basically included, so that the coarsening of the crystal grain at high temperatures and the penetration of the plated molten layer into the crystal grain boundary are suppressed. Further, in terms of manufacturing, since there is no need to add the expensive precipitate forming elements, manufacturing costs are reduced. Further, since the continuous annealing may be utilized instead of the batch annealing, production efficiency and material uniformity are improved.

A copper plated steel sheet according to the embodiment of the present disclosure includes a base steel sheet formed by the above-described cold rolled steel sheet and a copper plated layer coated on a surface of the base steel sheet.

A depth by which the plated layer is penetrated into the grain boundary of the cold rolled steel sheet may be 2.5 $\mu$m or less.

Hereinafter, the present disclosure will be described in more detail through the embodiments. However, although the embodiments are merely intended to describe the present disclosure, the present disclosure is not limited thereto.

**Embodiment**

A slab having compositions represented in Table 1 and including Fe and inevitable impurities is manufactured, and the compositions are actual values. The steel having the compositions represented in Table 1 is manufactured under process conditions represented in Table 2. A crystal grain size ($\mu$m), a Rockwell hardness (HR30T), a yield strength (YS), and an elongation (EL) of the manufactured cold rolled steel sheet, and a depth, by which the plated molten layer is penetrated into the crystal grain boundary after a brazing process in which the cold rolled steel sheet is cooled by air is performed after the cold rolled steel sheet is plated with copper and is heated up to 1150°C at a temperature rising rate of 300°C/second or more, are represented in Table 3.

[Table 1]

| composition | C | Mn | Al | P | S | N | B | Ti | Nb | V |
|---|---|---|---|---|---|---|---|---|---|---|
| Comparative steel 1 | 0.050 | 0.051 | 0.017 | 0.007 | 0.0008 | 0.0024 | 0.0009 | - | - | - |
| Invention steel 1 | 0.049 | 0.048 | 0.021 | 0.007 | 0.0008 | 0.0025 | 0.0018 | - | - | - |
| Invention steel 2 | 0.048 | 0.049 | 0.019 | 0.007 | 0.0008 | 0.0026 | 0.0029 | - | - | - |
| Comparative steel 2 | 0.050 | 0.052 | 0.022 | 0.007 | 0.0008 | 0.0025 | 0.0041 | - | - | - |
| Comparative steel 3 | 0.048 | 0.045 | 0.040 | 0.007 | 0.0008 | 0.0025 | 0.0010 | - | - | - |
| Comparative steel 4 | 0.053 | 0.056 | 0.038 | 0.007 | 0.0008 | 0.0025 | 0.0020 | - | - | - |
| Invention steel 3 | 0.049 | 0.051 | 0.042 | 0.007 | 0.0008 | 0.0024 | 0.0028 | - | - | - |

(continued)

| composition | C | Mn | Al | P | S | N | B | Ti | Nb | V |
|---|---|---|---|---|---|---|---|---|---|---|
| Comparative steel 5 | 0.047 | 0.054 | 0.041 | 0.007 | 0.0008 | 0.0025 | 0.0039 | - | - | - |
| Comparative steel 6 | 0.053 | 0.052 | 0.061 | 0.007 | 0.0008 | 0.0025 | 0.0011 | - | - | - |
| Comparative steel 7 | 0.048 | 0.044 | 0.060 | 0.007 | 0.0008 | 0.0026 | 0.0023 | - | - | - |
| Comparative steel 8 | 0.051 | 0.050 | 0.059 | 0.007 | 0.0008 | 0.0024 | 0.0029 | - | - | - |
| Comparative steel 9 | 0.048 | 0.052 | 0.063 | 0.007 | 0.0008 | 0.0025 | 0.0038 | - | - | - |
| Comparative steel 10 | 0.052 | 0.050 | 0.024 | 0.007 | 0.0008 | 0.0026 | - | 0.03 | - | - |
| Comparative steel 11 | 0.051 | 0.051 | 0.026 | 0.007 | 0.0008 | 0.0026 | - | | 0.02 | - |
| Comparative steel 12 | 0.047 | 0.047 | 0.025 | 0.007 | 0.0008 | 0.0025 | - | - | - | 0.02 |
| Comparative steel 13 | 0.010 | 0.053 | 0.023 | 0.007 | 0.0008 | 0.0023 | - | - | - | - |
| Comparative steel 14 | 0.120 | 0.050 | 0.028 | 0.007 | 0.0008 | 0.0025 | - | - | - | - |

[Table 2]

| Classification | Slab heating temperature (°C) | Hot rolling finish temperature (°C) | Spiral-wound temperature (°C) | Cold reduction rate (%) | Annealing temperature (°C) |
|---|---|---|---|---|---|
| manufacturing method 1 | 1250 | 900 | 650 | 85 | 750 |
| manufacturing method 2 | 1180 | 900 | 650 | 85 | 750 |
| manufacturing method 3 | 1250 | 900 | 650 | 85 | 550 |
| manufacturing method 4 | 1250 | 900 | 650 | 85 | 880 |

[Table 3]

| Composition | manufacturing method | Value of Equation (1) | Value of Equation (2) | Crystal grain size (μm) | Hardness (HR30T) | YS (MPa) | EL (%) | Depth (μm) |
|---|---|---|---|---|---|---|---|---|
| Comparative steel 1 | manufacturing method1 | 0.13 | 0.49 | 14.8 | 52.9 | 311.5 | 31.3 | 3.3 |
| Invention steel 1 | manufacturing method1 | 0.21 | 0.93 | 15.3 | 47.7 | 273 | 39.0 | 2.2 |
| Invention steel 2 | manufacturing method1 | 0.38 | 1.45 | 10.4 | 50.3 | 289.3 | 36.5 | 0.3 |
| Comparative steel 2 | manufacturing method1 | 0.47 | 2.13 | 4.5 | 56.0 | 321.1 | 26.9 | 0.1 |
| Comparative steel 3 | manufacturing method1 | 0.06 | 0.52 | 6.7 | 56.9 | 339.1 | 26.1 | 6.6 |
| Comparative steel 4 | manufacturing method1 | 0.13 | 1.04 | 7.6 | 53.8 | 308.2 | 30.6 | 3.1 |
| Invention steel 3 | manufacturing method1 | 0.17 | 1.51 | 9.4 | 50.7 | 298.7 | 35.3 | 1.2 |

(continued)

| Composition | manufacturing method | Value of Equation (1) | Value of Equation (2) | Crystal grain size ($\mu$m) | Hardness (HR30T) | YS (MPa) | EL (%) | Depth ($\mu$m) |
|---|---|---|---|---|---|---|---|---|
| Comparative steel 5 | manufacturing method1 | 0.24 | 2.02 | 5.6 | 53.1 | 315.6 | 29.8 | 0.3 |
| Comparative steel 6 | manufacturing method1 | 0.05 | 0.57 | 4.4 | 58.3 | 361.2 | 23.6 | 9.3 |
| Comparative steel 7 | manufacturing method1 | 0.10 | 1.15 | 4.5 | 56.1 | 344.5 | 25.5 | 5.2 |
| Comparative steel 8 | manufacturing method1 | 0.12 | 1.57 | 6.0 | 55.8 | 335.1 | 27.2 | 2.3 |
| Comparative steel 9 | manufacturing method1 | 0.15 | 1.97 | 4.4 | 56.6 | 345.5 | 26.0 | 0.7 |
| Comparative steel 10 | manufacturing method1 | - | - | 3.7 | 62.1 | 411.5 | 19.5 | 7.4 |
| Comparative steel 11 | manufacturing method1 | - | - | 4.1 | 60.8 | 387.2 | 21.9 | 7.2 |
| Comparative steel 12 | manufacturing method1 | - | - | 4.0 | 61.2 | 386.3 | 21.7 | 7.0 |
| Comparative steel 13 | manufacturing method1 | - | - | 19.5 | 43.2 | 240.5 | 42.6 | 18.5 |
| Comparative steel 14 | manufacturing method1 | - | - | 4.7 | 55.8 | 358.1 | 20.8 | 3.8 |
| Invention steel 2 | manufacturing method2 | 0.21 | 0.93 | 4.4 | 56.3 | 342.3 | 23.0 | 4.6 |
| Invention steel 2 | manufacturing method3 | 0.21 | 0.93 | 3.2 | 68.2 | 485.7 | 5.6 | 5.0 |
| Invention steel 2 | manufacturing method4 | 0.21 | 0.93 | 23.2 | 42.8 | 231.1 | 28.5 | 4.4 |

As represented in Table 3, it can be identified that when the invention steel 1 to the invention steel 3 satisfying the compositions of the present disclosure are manufactured through the manufacturing method 1, a hardness (HR30T) is 51 or less, a yield strength is 300 MPa or less, an elongation is 35% or more, an average crystal grain size is 8 $\mu$m to 16 $\mu$m, and a depth by which the copper plated molten layer is penetrated is 3 $\mu$m or less. Therefore, both room-temperature processability and high-temperature characteristics are secured. As described above, the processability is obtained through a proper ratio of N, B, and Al, and the high-temperature characteristics are obtained by adding a certain amount or more of C. It can be identified that as compared to the invention steel 2, in the invention steel 1 and the invention steel 3, the hardness is higher and the penetration of the plated molten layer is suppressed better. This is because B remaining after being combined with N is segregated in the crystal grain boundary.

The comparative steel 1 to the comparative steel 14 do not satisfy the composition condition of the present disclosure. In the comparative steels 3, 4, 6, 7, and 8, since the content of B is relatively lower than the content of Al, Equation (1) is not satisfied. Thus, it can be identified that since a large amount of AIN precipitates that are finer than BN precipitates is precipitated, and the crystal grain tends to become finer, an average crystal grain size is smaller than 8 $\mu$m, which is a generally high value, the strength and the hardness are high, and the elongation is low. In the case of the comparative steel 1, although Equation (1) is not satisfied, since both the content of Al and the content of B are smaller than the content of N, the average crystal grain size is 14.8 $\mu$m, which is relatively large. However, it can be identified that since the contents of B and Al do not satisfy a standard, N fails to be precipitated sufficiently, solid solved N is fixed to a potential, and thus, aging hardening occurs.

Further, in the case of the comparative steels 2, 5, and 9, since Equation (1) is satisfied, B is sufficient as compared to Al, and thus BN is formed well. However, since a value of Equation (2) exceeds 1.6, B left after being precipitated is segregated in the crystal grain boundary. Thus, the crystal grain becomes finer, and the material is hardened. Despite the hardening of the material, when B is segregated in the crystal grain boundary, since the penetration of the plated molten layer is suppressed well, the content of B should be managed within a predetermined range according to the content of Al.

In the case of the comparative steels 10 to 12, Ti, Nb, and V, which form fine precipitates well as compared to Al or B, are added, so that the crystal grain becomes finer and the material is hardened. Further, in the case of the comparative steels 13 and 14, the content of C is too small or too large. In the comparative steel 13, since the content of C is small, the material is advantageously processed. However, the plated molten layer is deeply penetrated at high temperatures, and thus there is a high possibility that defects occur. In the comparative steel 14, since the content of C is large, the material is hardened, and thus the processability deteriorates.

A manufacturing condition is also very important for controlling precipitates and microstructures. In the case of the manufacturing method 2, since a slab reheating temperature is low, precipitates existing in the slab may not be sufficiently solid solved, and thus the material deteriorates. In the case of the manufacturing method 3 and the manufacturing method 4, a continuous annealing temperature deviates from a proper range. When the annealing temperature is low, since recrystallization is not sufficiently performed, a processing and hardening effect obtained during the cold rolling may not be removed. Further, when the annealing temperature is high, since the crystal grain grows largely and roughly, the material is soft but not ductile, and thus the processability is not ensured.

The present disclosure is not limited to the embodiments, and may be implemented in various other forms. It may be understood by those skilled in the art to which the present disclosure pertains that the present disclosure may be implemented in other detailed forms without changing the technical spirit or the essential feature of the present disclosure. Therefore, it should be understood that the above-described embodiments are not restrictive but illustrative in all aspects.

## Claims

1. A continuous self-brazing cold rolled steel sheet comprising 0.02 wt% to 0.08 wt% of C, 0.03 wt% to 0.10 wt% of Mn, 0.10 wt% or less of Si (excluding 0 wt%), 0.005 wt% to 0.05 wt% of Al, 0.015 wt% or less of P (excluding 0 wt%), 0.01 wt% or less of S (excluding 0 wt%), 0.005 wt% or less of N (excluding 0 wt%), 0.0003 wt% to 0.0036 wt% of B, a remainder Fe, and other inevitable impurities, and satisfying Equations (1) and (2),
wherein an average crystal grain size is 8 $\mu$m to 16 $\mu$m.

[Equation 1]

$$0.15 \leq ([B]/10.81)/([Al]/26.98)$$

[Equation 2]

$$0.8 \leq ([B]/10.81)/([N]/14.01) \leq 1.6$$

(In Equations (1) and (2), [B], [Al] and [N] denote percent by weights of B, Al and N).

2. The continuous self-brazing cold rolled steel sheet of claim 1, wherein a weight ratio of AlN precipitates and BN precipitates satisfies Equation (3),

[Equation 3]

$$\{[BN]/(10.81+14.01)\}/\{[AlN]/(26.98+14.01)\} \geq 1$$

(In Equation (3), [BN] and [AlN] denote percent by weights of the BN precipitates and the AlN precipitates).

3. The continuous self-brazing cold rolled steel sheet of claim 1, wherein a weight ratio of N, the AlN precipitates, and the BN precipitates, existing in steel in a solid solution state, satisfies Equation (4).

[Equation 4]

$$([N]/14.01)/\{[AlN]/(26.98+14.01)+[BN]/(26.98+14.01)\} \leq 0.1$$

(In Equation (4), [N], [BN] and [AlN] denote a solid solution amount (wt%) of N, and percent by weights of the BN precipitates and the AlN precipitates).

4. A method of manufacturing a continuous self-brazing cold rolled steel sheet, the method comprising:

Heating, at 1200°C or more, a slab including 0.02 wt% to 0.08 wt% of C, 0.03 wt% to 0.10 wt% of Mn, 0.10 wt% or less of Si (excluding 0 wt%), 0.005 wt% to 0.05 wt% of Al, 0.015 wt% or less of P (excluding 0 wt%), 0.01 wt% or less of S (excluding 0 wt%), 0.005 wt% or less of N (excluding 0 wt%), 0.0003 wt% to 0.0036 wt% of B, a remainder Fe, and other inevitable impurities, and satisfying Equations (1) and (2);
manufacturing a hot rolled steel sheet by hot rolling the heated slab;
winding the hot rolled steel sheet;
manufacturing a cold rolled steel sheet by cold rolling the wound hot rolled steel sheet; and
annealing the cold rolled steel sheet at 600°C to 850°C.

[Equation 1]

$$0.15 \leq ([B]/10.81)/([Al]/26.98)$$

[Equation 2]

$$0.8 \leq ([B]/10.81)/([N]/14.01) \leq 1.6$$

(In Equations (1) and (2), [B], [Al] and [N] denote percent by weights of B, Al and N.)

5. The method of claim 4, wherein in the heating of the slab, the slab is heated at 1230°C to 1350°C.

6. The method of claim 4, wherein in the manufacturing of the hot rolled steel sheet, a finish rolling temperature ranges from 875°C to 1050°C.

7. The method of claim 4, wherein in the winding of the hot rolled steel sheet, a winding temperature ranges from 600°C to 750°C.

8. The method of claim 4, wherein in the manufacturing of the cold rolled steel sheet, cold rolling is performed at a reduction rate of 50% to 95%.

9. The method of claim 4, wherein in the annealing, continuous annealing is performed for 20 seconds to 600 seconds at 600°C to 850°C.

10. The method of claim 4, wherein in the annealing, batch annealing is performed for 5 hours to 72 hours at 600°C to 800°C.

11. The method of claim 4, wherein in the manufactured cold rolled steel sheet, a weight ratio of AlN precipitates and BN precipitates satisfies Equation (3),

[Equation 3]

$$\{[BN]/(10.81+14.01)\}/\{[AlN]/(26.98+14.01)\} \geq 1$$

(In Equation (3), [BN] and [AlN] denote percent by weights of BN precipitates and AlN precipitates.)

12. The method of claim 4, wherein a weight ratio of N, the AlN precipitates, and the BN precipitates, existing in the manufactured cold rolled steel sheet in a solid solution state, satisfies Equation (4).

[Equation 4]

$$([N]/14.01)/\{[AlN]/(26.98+14.01)+[BN]/(26.98+14.01)\} \leq 0.1$$

(In Equation (4), [N], [BN] and [AlN] denote a solid solution amount (wt%) of N, and percent by weights of the BN precipitates and the AlN precipitates)

13. A copper plated steel sheet comprising a base steel sheet formed by the cold rolled steel sheet of any one of claims 1 to 3 and a copper plated layer coated on a surface of the base steel sheet.

14. The copper plated steel sheet of claim 13, wherein a depth, by which the plated layer is penetrated into the cold rolled steel sheet, is 2.5 $\mu$m or less.

## INTERNATIONAL SEARCH REPORT

| | International application No. |
|---|---|
| | **PCT/KR2016/015125** |

| A. | CLASSIFICATION OF SUBJECT MATTER |
|---|---|

*C22C 38/06(2006.01)i, C22C 38/04(2006.01)i, C22C 38/02(2006.01)i, C22C 38/00(2006.01)i, C21D 8/02(2006.01)i, B21B 3/00(2006.01)i, B21B 37/74(2006.01)i*

According to International Patent Classification (IPC) or to both national classification and IPC

| B. | FIELDS SEARCHED |
|---|---|

Minimum documentation searched (classification system followed by classification symbols)

C22C 38/06; C21D 1/26; C21D 9/46; C21D 8/02; C22C 38/00; C22C 38/04; C22C 38/02; B21B 3/00; B21B 37/74

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: copper, plating, cold rolled steel, batch annealing, continuous annealing, manganese, carbon, boron

| C. | DOCUMENTS CONSIDERED TO BE RELEVANT | |
|---|---|---|
| Category* | Citation of document, with indication, where appropriate, of the relevant passages | Relevant to claim No. |
| X | JP 11-199972 A (NISSHIN STEEL CO., LTD.) 27 July 1999<br>See paragraphs [0017]-[0033], [0035], [0038] and claims 1, 2. | 1-14 |
| A | JP 2005-240101 A (JFE STEEL K.K.) 08 September 2005<br>See paragraph [0037] and claims 1, 2, 4. | 1-14 |
| A | KR 10-2012-0033010 A (HYUNDAI STEEL COMPANY) 06 April 2012<br>See paragraphs [0120]-[0123] and claim 1. | 1-14 |
| A | KR 10-2000-0031772 A (POHANG IRON & STEEL CO., LTD.) 05 June 2000<br>See abstract and claim 1. | 1-14 |
| A | KR 10-2010-0001334 A (HYUNDAI STEEL COMPANY) 06 January 2010<br>See paragraph [0080] and claims 1, 4. | 1-14 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 MARCH 2017 (20.03.2017) | **20 MARCH 2017 (20.03.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

International application No.

**PCT/KR2016/015125**

| Patent document cited in search report | Publication date | Patent family member | Publication date |
|---|---|---|---|
| JP 11-199972 A | 27/07/1999 | JP 03720183 B2 | 24/11/2005 |
| JP 2005-240101 A | 08/09/2005 | JP 04419605 B2 | 24/02/2010 |
| KR 10-2012-0033010 A | 06/04/2012 | KR 10-1185337 B1 | 21/09/2012 |
| KR 10-2000-0031772 A | 05/06/2000 | KR 10-0415658 B1 | 31/03/2004 |
| KR 10-2010-0001334 A | 06/01/2010 | KR 10-1003221 B1 | 21/12/2010 |